(19) Europäisches Patentamt
European Patent Office
Office européen des brevets

(11) Publication number: **0 426 315 A2**

## EUROPEAN PATENT APPLICATION

(21) Application number: 90311070.8

(22) Date of filing: 09.10.90

(51) Int. Cl.5: **C08L 23/10**, C08K 3/00,
// (C08L23/10,63:00,C08K3:00)

(30) Priority: 24.10.89 JP 274817/89

(43) Date of publication of application:
**08.05.91 Bulletin 91/19**

(84) Designated Contracting States:
**DE GB**

(71) Applicant: UBE INDUSTRIES, LTD.
12-32, Nishihonmachi 1-chome
Ube-shi, Yamaguchi(JP)

(72) Inventor: Ueno, Kohhei
4-2, Nishinagayamaen
Sakai-shi, Osaka(JP)
Inventor: Akagawa, Tomohiko
3-1302, 1, Harayamadai 3-chome
Sakai-shi, Osaka(JP)
Inventor: Nakano, Yoshifumi
Rojuman Habu 106, Habu-cho 2-chome
Kishiwada-shi, Osaka(JP)
Inventor: Hamada, Yukimasa
Ubekosan Hishiki-Shataku 223, 1130, Hishiki
Sakai-shi, Osaka(JP)

(74) Representative: Wise, Stephen James et al
c/o RAWORTH, MOSS & COOK 36 Sydenham
Road
Croydon, Surrey CR0 2EF(GB)

(54) **Polypropylene resin composition.**

(57) A polypropylene resin composition comprising:
(i) 100 parts by weight of a composition composed of
(a) 30 to 95% by weight of a polypropylene resin,
(b) 0 to 30% by weight of a thermoplastic elastomer, and
(c) 5 to 60% by weight of an inorganic filler;
(ii) 0.1 to 2 parts by weight of an epoxy resin;
(iii) 0.03 to 2 parts by weight of an antioxidant; and
(iv) 0.03 to 2 parts by weight of a light stabilizer.

## POLYPROPYLENE RESIN COMPOSITION

## BACKGROUND OF THE INVENTION

### 1. Field of the Invention

The present invention relates to an inorganic filler-containing a polypropylene resin composition from which a bleeding of additives, such as antioxidants and light stabilizers, does not occur during molding.

### 2. Description of the Related Art

The addition of an inorganic filler to a polypropylene resin has recently been widely conducted, to improve the heat resistance, mechanical strength, and rigidity thereof. Nevertheless, the polypropylene resin has an unsatisfactory heat resistance and light resistance even after the addition of the inorganic filler, and accordingly, considerably large amounts of antioxidant and light stabilizer are usually added to prevent a thermal decomposition and light deterioration thereof.

During an injection molding, the mold temperature is frequently lowered to shorten the molding cycle, and this causes a deposition on the surface of the mold of the additives evaporated from the surface of the injection molded polypropylene resin. The deposited additive is again deposited on the surface of the molded article, and this spoils the appearance of the molding.

To solve the above-described problem, studies have been conducted on an increase in the mold temperature, but such an increase in the mold temperature lengthens the molding cycle and causes a deformation of the molded article when extruded from the mold.

## SUMMARY OF THE INVENTION

Accordingly, the objects of the present invention are to eliminate the above-mentioned disadvantages of the prior art and to provide a polypropylene resin composition having an improved thermal stability and light resistance.

Other objects and advantages of the present invention will be apparent from the following description.

In accordance with the present invention, there is provided a polypropylene resin composition comprising:

(i) 100 parts by weight of a composition composed of

(a) 30 to 95% by weight of a polypropylene resin,
(b) 0 to 30% by weight of a thermoplastic elastomer , and
(c) 5 to 60% by weight of an inorganic filler;
(ii) 0.1 to 2 parts by weight of an epoxy resin;
(iii) 0.03 to 2 parts by weight of an antioxidant; and
(iv) 0.03 to 2 parts by weight of a light stabilizer.

## DESCRIPTION OF THE PREFERRED EMBODIMENTS

According to the present invention, the addition of an epoxy resin to a polypropylene resin suppresses an evaporation of an additive and provides a thermal stability and light resistance superior to those of the prior art through the addition of a lesser amount of additive.

Namely, in the polypropylene resin composition of the present invention, the epoxy resin prevents the evaporation of additives such as antioxidants and light stabilizers. Further, a thermal stability and light resistance superior to those of the conventional products can be obtained even when the amount of the additive is smaller than that of the prior art.

In the polypropylene resin composition of the present invention, the proportions of the polypropylene resin, thermoplastic elastomer, and inorganic filler must be as follows:

(a) polypropylene resin: 30 to 95% by weight
(b) thermoplastic elastomer: 0 to 30% by weight
(c) inorganic filler: 5 to 60% by weight
More preferable proportions are as follows:
(a) polypropylene resin: 50 to 90% by weight
(b) thermoplastic elastomer: 0 to 20% by weight
(c) inorganic filler: 10 to 50% by weight

When the amount of the polypropylene resin is less than 30% by weight, the moldability becomes very poor and, therefore, the resin composition is not suitable for practical use. On the other hand, when the amount of the polypropylene resin is more than 95% by weight, the strength of the molded article obtained from such a polypropylene resin composition becomes poor.

The amount of the thermoplastic elastomer should not be more than 30% by weight, preferably 20% or less. When the amount of the thermoplastic elastomer is more than 30% by weight, a problem arises in that the molded article obtained from the polypropylene resin composition does not exhibit a required rigidity. Note, the propylene resin composition of the present invention can omit the thermoplastic elastomer.

When the amount of the inorganic filler is less than 5% by weight, the rigidity of the molded article become poor. On the other hand, when the amount of the inorganic filler is more than 60% by weight, the appearance of the surface of the prepared molded article becomes poor.

The formulation amounts of the epoxy resin, light stabilizer, and antioxidant are as follows.

The formulation amounts of the epoxy resin, light stabilizer, and antioxidant are 0.1 to 2% by weight, 0.03 to 2 parts by weight, and 0.03 to 2 parts by weight, respectively, based on 100 parts by weight of a composition comprising a polypropylene resin, a thermoplastic elastomer, and an inorganic filler. More preferably, the amounts of the epoxy resin, light stabilizer, and antioxidant are 0.2 to 1.5 parts by weight, 0.05 to 1.5 parts by weight, and 0.05 to 1.5 parts by weight, respectively.

When the amount of the epoxy resin is less than 0.1 parts by weight, the thermal resistance of the resultant polypropylene resin composition becomes poor. On the other hand, when the amount of the epoxy resin is more than 2 parts by weight, the impact resistance of the molded article becomes poor.

When the amount of the light stabilizer is less than 0.03 parts by weight, the light resistance becomes poor, but on the other hand, when the amount is more than 2 parts by weight, the appearance of the molded article becomes poor, and thus the object of the present invention cannot be attained.

When the amount of the antioxidant is less than 0.03 parts by weight, little or no improvement of the heat deterioration resistance of the polypropylene resin composition is obtained. On the other hand, when the amount of the antioxidant is more than 2 parts by weight, the appearance of the molded article becomes poor, and thus the object of the present invention cannot be attained, as in the case of the light stabilizer.

The polypropylene resins usable in the present invention may include propylene homopolymers and copolymers of propylene with ethylene or $\alpha$-olefin having 3 to 10 carbon atoms may be employed alone or many mixture thereof. These polymers may be crystalline or amorphous, and further, may be those modified with, for example, an acid anhydride, or a coupling agent (e.g., maleic anhydride, itaconic anhydride, citraconic anhydride, vinyltrimethoxysilane, vinyltriethoxysilane $\gamma$-methacryloxypropyl trimethoxysilane, vinyl tris ($\beta$-methoxyethoxy) silane). In the case of copolymers, the content of the comonomer, such as ethylene or $\alpha$-olefin, is preferably 0.5 to 20% by weight, based on 100% by weight of the entire copolymer.

Examples of the thermoplastic elastomer usable in the present invention are olefin elastomers, such as ethylene-propylene rubber, ethylene-1-butene rubber and ethylene-propylene-diene copolymer rubber, and styrene elastomers such as styrene-butadiene rubber, styrene-isoprene rubber, hydrogenated styrene-butadiene rubber, and hydrogenated styrene-isoprene rubber. These elastomers may be used alone or in any mixture thereof. Also, modified products thereof may be used (e.g., modified with maleic anhydride, itaconic anhydride, cytraconic anhydride, vinyltrimethoxysilane, vinyltriethoxysilane $\tau$-methacryloxypropyl trimethoxysilane, vinyl tris ($\beta$-methoxyethoxy) silane).

Examples of the inorganic filler usable in the present invention are spherical fillers such as calcium carbonate and barium sulfate, flaky fillers such as talc and mica, and fibrous fillers such as carbon fibers, glass fibers, potassium titanate, magnesium oxysulfate, wollastonite and ceramic fibers. These fillers may be used alone or in any mixture thereof. Further, surface treated products of the above-described fillers also may be used (e.g., treated with stearic acid, isopropyl myristate, $\tau$-aminopropyltriethoxysilane).

Examples of the epoxy resins usable in the present invention are bisphenol A resins, epoxy cresol novolak resins, and alicyclic epoxy resins or in any mixture thereof. In this case, however, a curing agent is not used. Among the above-described epoxy resins, bisphenol A resin is particularly preferred.

The light stabilizer usable in the present invention may be one commonly used for the polyolefin, and examples of such a light stabilizer are HALS (i.e., bis (2,2,6,6,-tetramethyl-4-piperidyl) sebacate, bis (1,2,2,6,6-pentamethyl-4-piperidyl) sebacate, a condensate product of 1,2,3,4,-butantetracarboxylic acid, 1,2,2,6,6,-pentamethyl-4-piperidinol, and tridecyl alcohol), benzotriazole, benzoate and nickel salt light stabilizers (e.g., 2-(3-t-butyl-5-methyl-2-hydroxyphenyl)-5-chlorobenztriazole, 2, 4-di-t-butylphenyl-3,5-di-t-butyl-4-hydroxybenzoate, nickel bis [0-ethyl (3,5-di-t-butyl-4-hydroxybenzyl)] phosphonate). The above-mentioned light stabilizers may be used alone or in any mixture thereof.

The antioxidant usable in the present invention may be those commonly used for the polyolefin, and examples of such an antioxidant are phenolic, amine, and sulfur antioxidants. More specifically, tetrakis [methylene-3-(3′,5′-di-t-butyl-4-hydroxyphenyl) propionate] methane, alkyldiphenyl amine,dilauryl-3,3′-thiodipropionate). The above-described antioxidants may be used alone or in any mixture thereof.

In addition to the above-mentioned additives, any conventional additives such as colorants, flame retardants, lubricants, and antistatic agents also may be blended therein.

The polypropylene resin composition of the present invention may be produced by any method. For example, a pellet and/or powder of a polypropylene resin is homogeneously blended with the above-mentioned thermoplastic elastomer, inorganic filler, epoxy resin, antioxidant, and light stabilizer in a usual mixing device, for example, a Henschel mixer (trade name) and a tumbler mixer, melted and kneaded in a usual monoaxial or biaxial extruder, and then pelletized.

The polypropylene resin composition of the present invention may be molded into, for example, various injection molded articles, rods having various sections, tubes, or blown bottles, by, for example, injection molding, extrusion molding, extrusion stretching, or blow molding.

The above-mentioned molded articles have an excellent light resistance and heat deterioration resistance, and further, are free from a bleeding of the additives even immediately after molding, and therefore, have a good appearance.

For this reason, the above-mentioned molded articles are suitable for applications where a heat deterioration resistance, light resistance and good appearance are required, such as in electrical appliances and automobiles.

In the polypropylene resin composition of the present invention, the epoxy resin serves to prevent a bleeding of additives, such as an antioxidant and light stabilizer, from the surface of a molded article during injection molding. Therefore, even when an injection molding is conducted at a low mold temperature, the appearance of the molded article will not be spoiled due to the deposition of additives on the surface of the mold and molded article.

EXAMPLES

The present invention will now be further illustrated by, but is by no means limited to, the following Examples and Comparative Examples

The molded articles prepared in the Examples and Comparative Examples were tested by the following methods.

(1) The melt flow index was measured according to ASTM D 1238.

(2) Heat deterioration resistance:
The molded article was placed in a gear oven at 150°C, and a time taken for the surface of the molded article to be deteriorated and powdered was measured.

(3) Light resistance:
The molded article was placed in a sunshine fadeometer, and a time taken for the surface of the molded article to be deteriorated and discolored, or for cracks to appear, was measured. The black panel temperature of the sunshine fadeometer was 83°C, and a carbon arc lamp was used as the light source.

(4) Appearance of surface of molded article:
The surface of a mold having a size of a name card and provided with a pattern was washed with toluene, and a polypropylene resin composition was subjected to injection molding under the conditions of a resin temperature of 240°C and a mold temperature of 20°C, to prepare 1000 plate molded articles provided with a pattern. The pattern surface of the 1000th molded article was observed with the naked eye for an evaluation of whether haze or a white unevenness could be observed.

Example 1

A polypropylene resin, a thermoplastic elastomer, and an inorganic filler were weighed such that the proportions of the polypropylene resin, thermoplastic elastomer, and inorganic filler were 74% by weight, 4% by weight, and 22% by weight, respectively. Then 0.1 part by weight of a light stabilizer, based on 100 parts by weight of the total of the polypropylene resin, thermoplastic elastomer, and inorganic filler, 0.05 part by weight of an antioxidant, and 0.5 part by weight of an epoxy resin were added thereto, and the whole was dryblended.

After the completion of the dry blending, the blend was melt-kneaded in an extruder (resin temperature: 210°C) and pelletized to prepare a pellet of a polypropylene resin composition.

The polypropylene resin, thermoplastic elastomer, and inorganic filler used were a crystalline ethylene-propylene block copolymer (ethylene content = 7.5% by weight, melt flow index = 3 g/10 min at 230°C), an ethylene-propylene rubber (ethylene content = 75% by weight, Mooney viscosity, $ML_{1+4}$ (100°C) = 70), and talc (average particle diameter = 3 - 4 μm), respectively. The light stabilizer, antioxidant, and epoxy resin used were di-(2,2,6,6-tetramethyl-4-piperidyl) sebacate, tetrakis[methylene-3-(3′,5′-di-tert-butyl-4-hydroxyphenyl)propionate]methane, and liquid bisphenol A epoxy resin (Araldite GY250; a product of Ciba-Geigy Limited), respectively.

Plate molded articles were prepared through the use of this pellet under the above-mentioned conditions, and the appearance of the surface was evaluated. The results are shown in Table 1.

Examples 2 to 8

The epoxy resin was replaced with a solid bisphenol A epoxy resin (Araldite GT7004; a product of Ciba-Geigy Limited), and the addition amount thereof was varied. Further, the addition amount of the antioxidant was also varied. The preparation of pellets of polypropylene resin compositions, the molding of molded articles, and an evaluation of the molded articles were conducted in the same manner as in Example 1, except for the use of the above-described conditions. The results are shown in Table 1.

Example 9

The preparation of a pellet of a polypropylene resin composition, the molding of a molded article therefrom, and an evaluation of the molded article were conducted in the same manner as in Example 1, except that a cresol novolak epoxy resin (Araldite ECN1299; a product of Ciba-Geigy Limited) was used instead of the epoxy resin. The results are shown in Table 1.

Example 10

The preparation of a pellet of a polypropylene resin composition, the molding of a molded article therefrom, and an evaluation of the molded article were conducted in the same manner as in Example 1, except that an alicyclic epoxy resin (Araldite CY179; a product of Ciba-Geigy Limited) was used instead of the epoxy resin. The results are shown in Table 1.

Example 11

The preparation of a pellet of a polypropylene resin composition, the molding of a molded article therefrom, and an evaluation of the molded article were conducted in the same manner as in Example 1, except that the amounts of the light stabilizer and antioxidant were changed to 0.2 part by weight and 0.3 part by weight, respectively (based on 100 parts by weight of the total of the polypropylene resin, thermoplastic elastomer, and inorganic filler). The results are shown in Table 1.

Example 12

The light stabilizer and antioxidant were used in respective amounts of 0.07 part by weight and 0.05 part by weight, based on 100 parts by weight of the polypropylene resin, thermoplastic elastomer, and inorganic filler, and 0.5 part by weight of a solid bisphenol A (Araldite ECN 1299; a product of Ciba-Geigy Limited) was used as the epoxy resin. The preparation of a pellet of a polypropylene resin composition, the molding of a molded article therefrom, and an evaluation of the molded article were conducted in the same manner as in Example 1, except for use of the above-mentioned conditions. The results are shown in Table 1.

Example 13

The preparation of a pellet of a polypropylene resin composition, the molding of a molded article therefrom, and an evaluation of the molded article were conducted in the same manner as in Example 1, except that the light stabilizer, antioxidant, and epoxy resin were used in respective proportions of 0.4 part by weight, 0.5 part by weight and 1.3 part by weight, based on 100 parts by weight of the polypropylene resin, thermoplastic elastomer, and inorganic filler. The results are shown in Table 1.

Comparative Example 1

The preparation of a pellet of a polypropylene resin composition, the molding of a molded article therefrom, and an evaluation of the molded article were conducted in the same manner as in Example 1, except that no epoxy resin was added. The results are shown in Table 1.

Comparative Example 2

The preparation of a pellet of a polypropylene resin composition, the molding of a molded article therefrom, and an evaluation of the molded article were conducted in the same manner as in Example 11, except that no epoxy resin was added. The results are shown in Table 1.

Table 1

EP 0 426 315 A2

| | | Ex. 1 | Ex. 2 | Ex. 3 | Ex.4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|
| Ingredients of poly-propylene resin composition | Polypropylene resin (wt%) | 74 | same as value on left | same as value on left | same as value on left | same as value on left | same as value on left | same as value on left | same as value on left | same as value on left | same as value on left | same as value on left | same as value on left | same as value on left | same as value on left | same as value on left |
| | Thermoplastic elastomer (wt%) | 22 | | | | | | | | | | | | | | |
| | Inorganic filler (wt%) | 4 | | | | | | | | | | | | | | |
| | Light stabilizer (pts. wt.) | 0.1 | same as value on left | same as value on left | same as value on left | same as value on left | same as value on left | same as value on left | same as value on left | same as value on left | same as value on left | 0.2 | 0.07 | 0.4 | 0.1 | 0.2 |
| | Antioxidant (pts. wt.) | 0.1 | 0.05 | 0.1 | 0.15 | 0.05 | 0.05 | 0.1 | 0.15 | 0.1 | 0.1 | 0.3 | 0.05 | 0.5 | 0.1 | 0.3 |
| | Epoxy resin (pts. wt.) •Bisphenol A (liquid) | 0.5 | - | - | - | - | - | - | - | - | - | - | - | - | - | - |
| | •Bisphenol A (solid) | | 0.3 | 0.3 | 0.3 | 0.5 | 1.0 | 1.0 | 1.0 | - | - | 1.0 | 0.5 | 1.3 | - | - |
| | •Cresol novolak | - | - | - | - | - | - | - | - | 0.5 | - | - | - | - | - | - |
| | •Alicyclic epoxy | - | - | - | - | - | - | - | - | - | 0.5 | - | - | - | - | - |

Table 1 (Continued)

| | Ex. 1 | Ex. 2 | Ex. 3 | Ex.4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|
| Melt flow index (g/10 min) | 3.6 | 3.6 | 3.4 | 3.5 | 3.4 | 3.4 | 3.2 | 3.2 | 3.3 | 3.6 | 3.8 | 3.3 | 3.9 | 3.5 | 3.4 |
| Thermal stability (gear oven life, hr) | 370 | 264 | 336 | 283 | 322 | 336 | 384 | 389 | 216 | 240 | 405 | 310 | 480 | 192 | 278 |
| Light resistance (Sunshine fadeometer, hr) | 850 | >1200 | >1200 | >1200 | 1200 | 850 | 850 | 850 | 600 | >1200 | >1200 | 600 | >1200 | 500 | 1000 |
| Appearance of surface of molded article | good | good | good | good | good | good | good | good | good | good | good | good | good | poor | poor |

## Claims

1. A polypropylene resin composition comprising:
    (i) 100 parts by weight of a composition composed of
        (a) 30 to 95% by weight of a polypropylene resin,
        (b) 0 to 30% by weight of a thermoplastic elastomer, and
        (c) 5 to 60% by weight of an inorganic filler;
    (ii) 0.1 to 2 parts by weight of an epoxy resin,
    (iii) 0.03 to 2 parts by weight of an antioxidant, and
    (iv) 0.03 to 2 parts by weight of a light stabilizer.

2. A polypropylene resin composition as claimed in claim 1, wherein the polypropylene resin is at least one polymer selected from polypropylene homopolymers and copolymers of propylene with at least one α-olefin having 2 or 4 to 10 carbon atoms and modified products thereof with an acid anhydride or a coupling agent.

3. A polypropylene resin composition as claimed in claim 1, wherein the thermoplastic elastomer is at least one elastomer selected from the group consisting of olefin elastomers and styrene elastomers.

4. A polypropylene resin composition as claimed in claim 1, wherein the inorganic filler is at least one filler selected from the group consisting of inorganic spherical fillers, inorganic flaky fillers, and inorganic fibrous fillers.

5. A polypropylene resin composition as claimed in claim 1, wherein the epoxy resin is at least one epoxy resin selected from the group consisting of bisphenol A resins, epoxy cresol novolak resins, and alicyclic epoxy resins.

6. A polypropylene resin composition as claimed in claim 1, wherein the light stabilizer is at least one compound selected from the group consisting of HALS, benzotriazole, benzoate, nickel salt light stabilizers.

7. A polypropylene resin composition as claimed in claim 1, wherein the antioxidant is at least one compound selected from the group consisting of phenolic antioxidants, amine antioxidants, and sulfur antioxidants.